# EUROPEAN PATENT SPECIFICATION

(11) **EP 1 950 660 B1**
(45) Date of publication and mention of the grant of the patent: **28.06.2017**
(21) Application number: 07001816.3
(22) Date of filing: 27.01.2007
(51) Int. Cl.: G06F 11/263

(54) **Online CPU test for superscalar processors**
Online-CPU-Test für superskalare Prozessoren
Test en ligne de l'unité centrale pour processeurs superscalaires

(43) Date of publication of application: 30.07.2008
(73) Proprietor: Thales Deutschland GmbH, 71254 Ditzingen (DE)
(72) Inventor: Scherrer, Christoph, Dr., 1030 Wien (AT); Spies, Werner, 2454 Trautmanndorf (AT); Messner, Andreas, 1140 Wien (AT); Plattner, Christoph, 1220 Wien (AT); König, Nikolaus, 2320 Schwechat (AT); Drechsel, Michael, 01109 Dresden (DE)
(74) Representative: Kohler Schmid Möbus Patentanwälte

(56) References cited:
- US-A1- 2003 188 044
- US-A1- 2004 078 673
- US-A1- 2006 107 158
- US-B1- 6 212 667

## Description

### Background of the invention

The invention relates to a method for testing a superscalar CPU (=central processing unit) of a computer system, wherein the superscalar CPU comprises a number of architectural items performing basic operations within the superscalar CPU and the entirety of architectural items of the superscalar CPU constitutes the characteristics of the superscalar CPU, wherein the testing is done during startup of the computer system and/or online during operation of the computer system, wherein the testing comprises a pseudo random testing procedure, wherein pseudo random test instructions and pseudo random test data are fed to the superscalar CPU, and wherein an output data signature of the superscalar CPU is compared to a reference data signature.

Such a method is known from US 2003/188044 A1. Testing procedures are also described in the CENELEC 50129 Standard.

Computer systems are used in numerous ways in everyday life. While in most cases, a malfunction of a computer system is merely annoying, there are safety critical computer systems, where a malfunction can endanger the life of people or destroy valuable assets. Safety critical systems include, for example, railway signalling, on board and trackside systems.

To avoid a malfunction of a safety critical computer system, it must be tested for proper functioning. Only if sufficient testing is provided, the safety critical computer system will be certified and released for practical use.

The most important component of a computer system is the central processing unit (CPU). Therefore, a test of the CPU is essential when testing a computer system.

It is required to do a testing of a CPU of a computer system upon every startup ("switching on") and/or regularly during operation ("online"), typically after defined time intervals have elapsed. These two types of testing are summarized as "startup/online testing" hereinafter.

Currently available methods for startup/online testing of CPUs of a computer system test the functional features such as registers and ALUs (arithmetic logic units) by exercising these features directly by a test program. These currently available methods rely on the availability of information about the internal design and implementation of the CPU hardware.

While for conventional CPUs, such information is available, for superscalar CPUs, in contrast, information about internal design and implementation of CPU hardware is typically incomplete or unavailable. The reason for this is simply that CPU manufacturers no longer disclose such information. In addition, modem superscalar CPUs do not directly map the hardware functionality and instruction set architecture. Therefore, the known methods of startup/online testing of CPUs may not be applied to most modern superscalar CPUs.

Superscalar CPUs have functional units that may work in parallel within the CPU, and the sequence of commands fed into an superscalar CPU may be permuted as long as the commands do not correlate. Superscalar CPUs are much more powerful, in particular faster, than conventional CPUs.

From processor design verification, the method of pseudo random testing (PRT) of a processor prototype is known, see e.g. [SILA03].

US 2003/188044 A1 discloses a system and method for verifying superscalar computer architectures. For this purpose, pseudo random test streams are used. By means of an opcode biasing service structure and a configuration file, a test program is drafted. In the configuration file, the particular architecture of the superscalar CPU to be tested is contained.

### Object of the invention

It is the object of the invention to introduce a method for testing a superscalar CPU of a computer system that can be applied with basically every superscalar CPU, in particular even if detailed information about internal design and implementation of CPU hardware is not available.

### Short description of the invention

This object is achieved, in accordance with the invention, by a method as introduced in the beginning, characterized by estimating architectural items of the superscalar CPU based on the general architecture of a class of a multitude of different superscalar processors, wherein the superscalar CPU belongs to said class, wherein an architectural scope of the superscalar CPU comprises the entirety of the estimated architectural items of the superscalar CPU, and wherein the characteristics of the superscalar CPU is a subset of the architectural scope of the superscalar CPU, and choosing the pseudo random test instructions and the pseudo random test data based on the architectural scope.

The key idea of the invention is to employ and adapt the pseudo random testing technique to test a superscalar processor for hardware faults during system startup and/or online during system operation. By means of the invention, it becomes possible to provide sufficient testing to a safety critical computer system comprising a superscalar CPU, in accordance with CENELEC (Comité Européen de Normalisation Electronique) 50129 Standard, in particular at the Safety Integrity Level (SIL) 4. In other words, it is the invention that allows the use of modem superscalar CPUs within such safety critical computer systems requiring.

Within this invention, the term "architectural item" or "architectural feature" refers to a basic operation unit within a superscalar CPU, such as an ALU or a sequencer. The entirety of architectural items of a superscalar CPU makes up the "characteristics" of the superscalar CPU. Typically, the architectural items of the superscalar CPU are unknown or incompletely known before testing. Therefore, the architectural items of the superscalar CPU are estimated within the inventive testing method. The information basis for this estimate typically includes information about superscalar CPUs in general, and/or about a class of different superscalar CPUs the CPU to be tested belongs to, and/or performance data of the superscalar CPU to be tested, and/or results of preparation measurements made with the superscalar CPU to be tested. Note that individual internal design information and individual implementation of hardware information of the superscalar CPU to be tested is typically neither available nor used. The entirety of estimated architectural items within the superscalar CPU to be tested is referred to as "scope" of the testing procedure. The estimate is preferably conservative, i.e. the actual "characteristics" of the CPU is a subset of the "scope".

Within the inventive pseudo random testing procedure, a set of test Instructions is fed into the superscalar CPU of the computer system, along with a set of test data. The test instructions are executed with the test data within the superscalar CPU then. The exact choice of test instructions and test data is basically arbitrary, but the types and amounts of test instructions and test data are chosen such that there is a high probability that all estimated architectural items of the superscalar CPU, as defined by the "scope", are executed during the test ("random test"). In this respect, the scope determines the type and amount of test instructions and test data. The result of the execution of the test instructions with the test data by the superscalar CPU to be tested is a data output data signature.

The identification of the set of instructions from which the pseudo random test code is formed is guided by CPU resource usage. As the aim of testing is to uncover dormant faults (i.e. faults that do not manifest immediately as detectable system output errors but bear the danger of accumulating in independent, redundant computing nodes) only those system resources have to be tested that can lead to a hazard and are used during system operation in principle, but are not guaranteed to be exercised regularly. So the basis for the set of instructions to form the random test sequence comprises only those instruction that are issued by the compiler.

From this pool of instructions, those that refer to changes in the control flow (branches, calls, etc.) do not have to be tested due to the synchronous mode of operation of the overall computer system. A malicious change of the program flow would be detected by the system voter at synchronization points.
The synchronous mode of operation of the overall system also covers faults in CPU units whose failure merely lead to a performance degradation (e.g. branch prediction unit). Thus these units do not have to be tested.
Also instructions and CPU resources that are guaranteed to be never used during system operation do not have to be tested.

Despite the arbitrary character of the test instructions and the test data, the test instructions and the test data are known, in particular reproducible ("pseudo random"). A safe computer systems executes the same test instructions with the same test data (typically in before or in parallel) as the superscalar CPU, resulting in a reference data signature (which is assumed to be free of errors). If the architectural items of the superscalar CPU work properly, the reference data signature and the output data signature are identical; then the tested superscalar CPU is approved, and the computer system may start or continue its normal operation. If the output data signature deviates from the reference data signature, there is a malfunction of one or several of the architectural items of the tested superscalar CPU; the operation of the computer system is barred then.

The inventive method provides that architectural items of the superscalar CPU to be tested are estimated based on the general architecture of a class of a multitude of different superscalar processors, wherein the superscalar CPU belongs to said class, thus determining an architectural scope of the superscalar CPU, and that the estimated architectural scope is used for choosing the pseudo random test instructions and the pseudo random test data. Thus, the individual design of the tested superscalar CPU may remain (and as a rule remains) unknown. The estimate of the scope may be based on the general architecture of the class alone, in accordance with the invention.

### Preferred variants of the invention

A preferred variant of the inventive method is characterized in that the testing comprises
- a functional test (TEST F) testing the functionality of the superscalar CPU,
- and a second test (TEST R) testing the processor-internal machinery of the superscalar CPU.
It is the second test, TEST R, which includes the pseudo random testing procedure.
The functional test, TEST F, is performed to ensure the correct functioning of the CPU from a software point of view. I.e. it is checked whether the CPU is able to execute a given instruction, irrespective of which CPU hardware resources are exercised to execute the particular instruction. In contrast to that, the test R is designed to test the underlying hardware of the superscalar CPU, in particular the architectural items within the scope.

In another preferred variant, tested architectural items of the superscalar CPU comprise
- an intricate instruction sequencer;
- multiple complex ALUs (arithmetic logic units) and simple ALUs, in particular wherein the simple ALUs outnumber the complex ALUs,
- registers;
- shadow registers;
- floating point units (FPUs) and/or
- address generation units (AGUs). These architectural items are of particular importance in practice. A "scope" as well as the "characteristics" of a superscalar CPU may comprise one or several of each of the architectural items listed above.

In a preferred variant, the pseudo random testing procedure includes a number of test sequences, wherein each test sequence is dedicated to testing a class of identical architectural items of the estimated architectural scope. With this variant, the architectural items of the scope are grouped in groups of identical architectural items, and with one test sequence, one group is tested. This makes the testing procedure more efficient. This further development is an example for optimisation of the types and sequence of test instructions with respect to the architectural items to be tested.

In another, particularly preferred variant, the pseudo random test instructions and the pseudo random test data are chosen such that each architectural item of the estimated architectural scope is exercised during the testing with a statistical certainty of at least 95%, preferably at least 99%. The statistical certainty may be altered by altering the amount of test instructions (or number of commands) within the testing procedure. The described statistical certainties are sufficient for reliable malfunction detection. Having achieved a certain statistical certainty may act as a stop criterion of the test.

In another preferred variant of the inventive method, the pseudo random testing procedure is based on a fault model of type "stuck at" or of type "opens" or of type "bridging". These fault models have been proven in practice.

In an advantageous variant, the pseudo random test instructions and the pseudo random test data are generated online during testing from seeds. This variant requires less storage capacity for the test instructions and the test data, compared to direct instruction/data retrieving.

In a further advantageous variant of the inventive method, the computer system is designed for safety critical computing, in particular safety critical realtime computing. The inventive method does not influence realtime characteristics of the computer system, since it works on the user level under supervision of the operating system. In particular, it can be interrupted. Therefore, it is well suited for safety critical realtime computing. Safety critical computing systems of the invention include, in particular, railway signalling systems.

Also within the scope of the invention is a computer program comprising means for performing the inventive method or one of its variants when run on a computer system comprising a superscalar CPU. The computer program may be saved on a data storage medium, such as a floppy disc, a hard disc drive, a compact disc, a DVD or a USB stick.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing and detailed description of the invention

The invention is shown in the drawing.
- Fig. 1: shows a flow diagram of the inventive method for testing a superscalar CPU of a computer system;
- Fig. 2: shows an illustration of architectural items, architectural scope of the test, and the characteristics of a superscalar CPU, in accordance with the invention.

### 1. Introduction

The invention covers the startup and online testing of modern, superscalar CPUs, which typically are integrated in a TAS (transport automation system) platform for performing said method. The inventive approach has already been reviewed by an independent assessment authority (TueV Rail Munich) to be eligible to test superscalar processors of applications in the rail domain that have to comply with Safety Integrity Level 4 of the CENELEC Standard.

Superscalar processors employ a number of techniques implemented in hardware that make it very difficult to apply software based conventional functional tests. For example, a typical superscalar processor utilizes register renaming which results in an unknown number of internal shadow registers that are not visible to the user. Further, parallel execution units exist such that it cannot be foreseen in which one a particular instruction of the test software will be executed. Also the internal instruction set may be different from the instruction set visible to the software.

For example, the current Intel Processors family (P6 processor generation) internally works in a RISC - machine like manner. The IA32 architecture (in terms of instructions and registers) is just the interface to the system software. Internally, the IA32 instructions are decoded into micro instructions that can be executed on parallel ALUs and AGUs (Address Generation Units). Further, the P6 family utilizes register renaming which results in an unknown number of internal shadow registers that are not visible to the user.

Chip manufacturers do not reveal processor details necessary to design effective test software, which is able to exercise all hardware resources of the processor. Thus the designer of an online test has to resort to a method that does not require detailed knowledge on processor internals.

### 2. General Approach of the inventive testing method

All these implications require a new approach to CPU testing. To be able to deal with superscalar processors a two-step testing approach is implemented:
1. TEST F: The functionality of the CPU (instruction execution, registers) has to be tested.
2. TEST R: The processor-internal machinery has to be tested.
With Test F the correct functional behavior from the point of view of the system software is guaranteed at a given instant. However, the functional test does not guarantee the exercise of all hardware resources inside the processor. Parallel units and hidden resources are not necessarily touched by the test. To satisfy Test F, generic instruction oriented CPU tests are well suited. To satisfy Test R, the technique of *pseudo random testing* is applied.

### Pseudo random Testing

For processor design verification the method of pseudo random testing (PRT) is used by chip manufacturers [Sila03], [KANT95] and academia [SOSN96], [BATC99]. The basic idea of PRT is to heavily load the processor with a very long random instruction stream, which is operating on a randomly initialized piece of memory and register settings. The correctness of the execution of the random program is shown by comparing a signature of the register content and used memory (="output data signature") to an offline computed known-good reference signature (="reference data signature") upon test completion.

The key idea of the inventive approach is to employ and adapt the pseudo random testing technique to test the processor for hardware faults during startup and online during system operation.
Although the technique of pseudo random testing is state of the art for processor design verification by chip manufacturers, the adaptation of this approach for startup and online testing is innovative and can be seen as a key to the application of modern, superscalar processors in safety critical systems compliant with CENELEC 50129.

### 3.Test Coverage

An important criteria for the applicability of a test is its coverage with respect to the underlying logic circuit and the faults it is intended to detect. For a CPU test to be compliant with CENELEC SIL 4 requirements the test coverage has to be proven.

The precise, internal mechanisms of a superscalar processor are not known to the designer of a fault tolerant, safety critical system. The key idea to proof the test coverage is to find an assortment of processor instructions (i.e. set of test vectors) together with a minimum number of instructions to be executed to reach sufficient test coverage. This analysis is based on general architecture features of superscalar processors, widely accepted assumptions on how superscalar processors work and statistical reasoning. Hence, only architectural features and assumptions *that make up* a superscalar processor *in general* have to be understood.

Examples for the architectural features are:
- Intricate instruction sequencer;
- Multiple complex ALUs and simple ALUs, where the simple ALUs outnumber the complex ALUs;
- Registers;
- Numerous shadow registers;
- Separate units intended to compute the effective address of memory accesses (AGUs).
For each architectural feature (execution unit, AGUs, etc.) subject to testing the scope of the test target is derived. For example, the maximum numbers of parallel ALUs (Arithmetic Logic Units), shadow registers and parallel AGUs (Address Generation Units) that the test has to cope with is determined. These figures are derived from *sound and conservative engineering reasoning* on the overall architecture of the processor, rather than from detailed information provided by the processor manufacturer.

Once the architectural scope is defined, the structural properties of the test program can be constituted such that all architectural features are sufficiently addressed. A key point is that the necessary number of instructions is determined statistically from the architectural scope. From the structural properties of the random test program and the architectural scope of the target circuitry the number of instructions is chosen such that each architectural item (e.g. register, ALU,) is exercised with a data test pattern with given statistical certainty (e.g. 99%).

### 4. Implementation - Design of random test routines

From the architectural scope of the test target, the structure of the CPU test is as follows:

### 4.1. Test F: Functional Test

This is an instruction oriented test, which is identical to the generic CPU tests for non-superscalar processors. It covers the **functionality** of the CPU registers and CPU instructions based on the i386 instruction set. Note that Test F is optional.

### 4.2. Test R: Pseudo Random Tests

A suite of **pseudo random tests** that cover the internal mechanisms of a superscalar processor. This suite is composed of test classes, which all have in common that the instructions are chosen pseudo randomly from a well defined reference set of instructions ("instruction pool") and work with data that is also generated pseudo randomly. The input data for each test sequence constitutes the data test patterns, which have to be fed to processor internal memory as recommended by the CENELEC standard.
Three test classes can be identified:

### 4.2.a. General Random Test

These tests execute a large number of pseudo randomly generated instructions, which are taken from the pool of all instructions issued by the compiler. The length of the instruction sequence is chosen to cover the renaming registers of a superscalar processor. The aim is to test the *instruction sequencer, the renaming registers* and the *complex ALUs* of the CPU.

*The necessary number of random instructions* is determined from the maximum number of shadow registers with the assumption that every write-after-write or write-after-read data hazard in the instruction sequence tests one randomly selected shadow register with a randomly selected data test pattern.

### 4.2.b. Execution unit test

Due to the purely pseudo-random nature of the general random test, it is not necessarily guaranteed, that a large number of parallel ALUs is exercised by the test. Since the scheduling algorithms for parallel execution units are not disclosed by the processor manufacturer, it is assumed that register stalls have the potential to leave execution units idle. The ALU test is designed to explicitly exercise all *simple ALUs.*

*The necessary number of random instructions* is determined from the maximum conceivable number of parallel simple ALUs, which is given by the number of general purpose registers. The necessary number is chosen such to ensure that all selected variations of simple ALU instructions are executed on all parallel ALUs at least once from a statistical point of view.
The instructions forming this random test sequence only comprise instructions for the addition and subtraction on simple ALUs.

### 4.2.c. Address computation units test

The general random test does not utilize register indirect addressing modes, since this would extremely complicate the implementation of the test or compromise the randomness of the instruction sequence. Therefore, address generation units are only partially exercised by the general random test. The AGU test is designed to explicitly exercise all parallel *address generation units. The necessary number of random instructions* is determined from the number of available addressing modes and the maximal number of parallel AGUs, such that each addressing mode is executed on each AGU at least once from a statistical point of view.
The instructions forming this random test sequence only comprise instructions for moving data using all possible addressing schemes.

### 5. Implementation - test failure criteria

All tests of Testsuite R work as pseudo randomly generated instructions streams that work on pseudo randomly generated input data. Upon completion of the instruction stream a signature over the output data is computed and compared to a "golden" signature, which was calculated off line on a known-good machine and stored on the machine in the field. If these signatures match the processor is regarded as fault-free.

### 6. Implementation - instruction/data generation

Both, the instruction streams and the input data are preferably generated online from seeds. With this approach the memory consumption of the CPU test is minimized, since no test programs and reference input data structures have to be stored on the machine. However, conventional instruction/data retrieving (i.e. readout directly from a memory) is also possible.

### 7. Summary

The inventive approach enables the startup and online testing of superscalar processors without knowledge about implementation details of the processor to test. Only a general understanding of modern, superscalar processors is necessary to design the test. Thus, the approach suits a whole family of processors rather than just a single processor. The approach is based on pseudo random testing and applies statistical arguments to prove its test coverage.

### 8. Detailed description of the figures

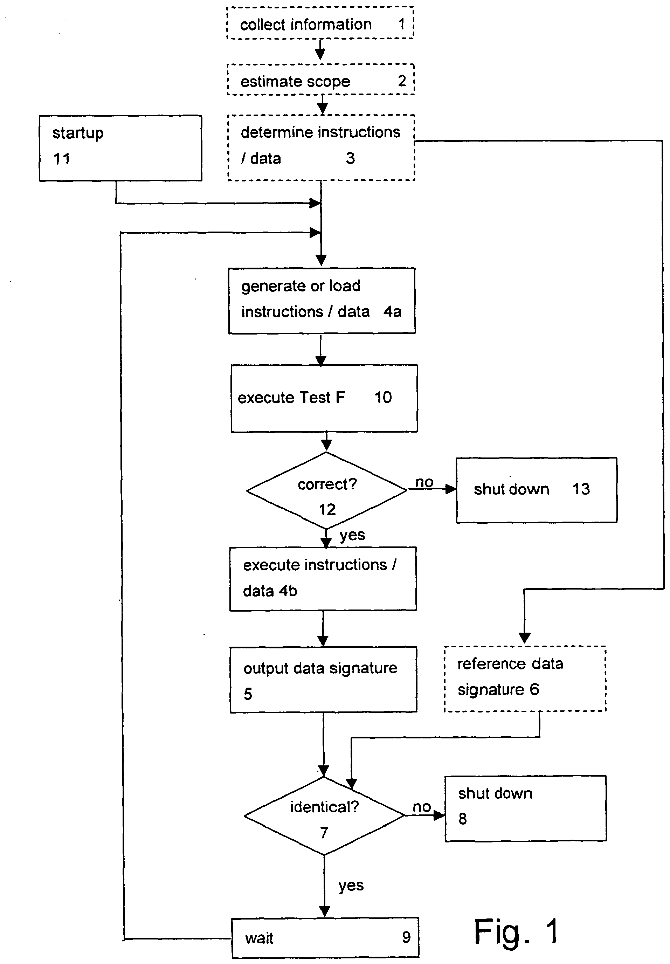

Fig. 1 shows a flow diagram of the inventive method for testing a superscalar CPU of a computer system. Steps marked with dashed lines only have to be executed once upon implementation of the test, whereas steps marked with full lines are executed regularly.

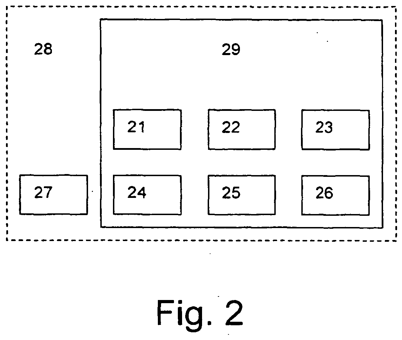

The method begins with step 1 of collecting information about the superscalar CPU to be tested (abbreviated just CPU). The information will typically include only general information about the class of superscalar processors the CPU belongs to, but no specific information. Based on this information, an architectural scope is estimated in step 2. The scope is the entirety of architectural items or features assumed to be present in the CPU (see also Fig. 2 for details). Based on the scope, pseudo random test instructions and pseudo random test data is determined in step 3. The test instructions and test data are recorded, ready for reproduction (e.g. from seeds).

In the example shown in Fig. 1, in the next step 4a, the test instructions and the test data for test R are loaded into the CPU, or are generated from seeds within the CPU. Subsequently, test F is executed (see step 10). In case an error is detected by test F (see step 12), the computer system is shut down (see step 13). Else, i.e. if no error is detected by test F, test R is continued with step 4b. Note that steps 10, 12,13 of test F are independent from test R, and therefore can alternatively be done completely before step 4a, or completely after step 4b or step 7, for example.

In step 4b, the test instructions and test data are executed within the CPU. The result is an output data signature, see step 5. The test instructions are also executed offline on a safe computer system with the test data, by means of which a reference data signature is determined in step 6.

In step 7, the output data stream and the reference data signature are compared. If they are non-identical, i.e. if a malfunction of the CPU is registered, the affected computer system is shut down immediately in step 8. If the signatures are identical, i.e. if the CPU works fine, the computer system is approved (or stays approved) for normal operation.

After a defined time period (such as one hour or one day) of normal operation, or after having executed a defined amount of workload during normal operation - i.e. after some waiting in step 9 - a further testing cycle begins. The further testing cycle begins with loading (or generating) the known test instructions and the known test data into the CPU in step 4a again.

Once the inventive test is implemented, a test cycle may be initiated upon every system startup 11, starting with the feeding (or generating) of the known test instructions and the known test data in step 4a.

Fig. 2 illustrates the correlation between architectural items (or architectural features) 21 through 27, the architectural scope 28, and the characteristics 29 of a superscalar CPU, in accordance with the invention.

A superscalar CPU actually comprises a number of architectural items 21-26. The entirety of the actual architectural items 21-26 of the CPU are called the characteristics 29 of the CPU. However, since the hardware implementation and design details of the superscalar CPU are typically not known, its architectural items must be estimated (i.e. guessed with the aid of incomplete information). The entirety of the estimated architectural items is called scope 28.

In order to achieve a sufficient testing safety, the estimate is done conservatively. This means that in case of doubt, the CPU is assumed to be more complex than it actually is. As a result, the scope 28 typically consists of more architectural items 21-27 than the characteristics 29. Here, item 27 is an overestimate.

The pseudo random test instructions and the pseudo random test data are chosen such that all items 21-27 of the scope 28 are executed with a minimum statistical certainty (such as 95% or 99%). This makes sure that all actually present items 21-26 of the characteristics, too, are executed with the same statistical certainty.

### 9. References

- [SILA03]: Isic Silas et. al, "System-Level Validation of the Intel® Pentium® M Processor", Intel Technology Journal, Vol. 7, Issue 2, May 21, 2003, ISSN 1535-864X
- [SOSN96]: J. Sosnowski et. al., "Pseudorandom versus Deterministic Testing of Intel 80x86 Processors", Proceedings of the EUROMICRO-22,1996, pp 329-336
- [BATC99]: Ken Batcher, Christos Papachristou. "Instruction Randomization Self Test For Processor Cores," vts, p. 34, 1999 17TH IEEE VLSI Test Symposium, 1999.
- [KANT95]: Michael Kantrowitz and Lisa M. Noack, "Functional Verification of a Multiple-issue, Pipelined, Superscalar Alpha Processor - the Alpha 21164 CPU Chip", Digital Technical Journal Volume 7 , Issue 1 (January 1995), pp. 136 - 144, ISSN:0898-901X

## Claims

1. Method for testing a superscalar CPU (=central processing unit) of a computer system,
wherein the superscalar CPU comprises a number of architectural items (21-26) performing basic operations within the superscalar CPU and the entirety of architectural items of the superscalar CPU constitutes the characteristics (29) of the superscalar CPU,
wherein the testing is done during startup (11) of the computer system and/or online during operation of the computer system,
wherein the testing comprises a pseudo random testing procedure (1-8), wherein pseudo random test instructions and pseudo random test data are fed to the superscalar CPU (4a, 4b),
and wherein an output data signature of the superscalar CPU is compared to a reference data signature (7),
**characterized by**
estimating (2) architectural items (21-27) of the superscalar CPU based on the general architecture of a class of a multitude of different superscalar processors, wherein the superscalar CPU belongs to said class, wherein an architectural scope (28) of the superscalar CPU comprises the entirety of the estimated architectural items (21-27) of the superscalar CPU, and wherein the characteristics of the superscalar CPU is a subset of the architectural scope (28) of the superscalar CPU, and choosing the pseudo random test instructions and the pseudo random test data (3) based on the architectural scope (28).

2. Method according to claim 1, **characterized in that** the testing comprises
- a functional test (TEST F) testing the functionality of the superscalar CPU (10, 12, 13),
- and a second test (TEST R) testing the processor-internal machinery of the superscalar CPU (1-8).

3. Method according to claim 1, **characterized in that** tested architectural items (21-27) of the superscalar CPU comprise
- an intricate instruction sequencer;
- multiple complex ALUs (arithmetic logic units) and simple ALUs, in particular wherein the simple ALUs outnumber the complex ALUs,
- registers;
- shadow registers;
- floating point units (FPUs) and/or
- address generation units (AGUs).

4. Method according to claim 1, **characterized in that** the pseudo random testing procedure (1-8) includes a number of test sequences, wherein each test sequence is dedicated to testing a class of identical architectural items (21-27) of the estimated architectural scope (28).

5. Method according to claim 1, **characterized in that** the pseudo random test instructions and the pseudo random test data are chosen such that each architectural item (21-27) of the estimated architectural scope (28) is exercised during the testing with a statistical certainty of at least 95%, preferably at least 99%.

6. Method according to claim 1, **characterized in that** the pseudo random testing procedure (1-8) is based on a fault model of type "stuck at" or of type "opens" or of type "bridging".

7. Method according to claim 1, **characterized in that** the pseudo random test instructions and the pseudo random test data are generated online during testing from seeds.

8. Method according to claim 1, **characterized in that** the computer system is designed for safety critical computing, in particular safety critical realtime computing.

9. Computer program comprising means for performing the method of claim 1 when run on a computer system comprising a superscalar CPU.

## Patentansprüche

1. Verfahren zum Testen einer superskalaren CPU (=Zentralrecheneinheit, central processing unit) eines Computersystems,
wobei die superskalare CPU eine Anzahl von Architekturelementen (21-26) aufweist, die Basisoperationen innerhalb der superskalaren CPU ausführen und die Gesamtheit der Architekturelemente der superskalaren CPU die Eigenschaften (29) der superskalaren CPU darstellt,
wobei das Testen während des Hochfahrens (11) des Computersystems und/oder online während des Betriebs des Computersystems ausgeführt wird,
wobei das Testen ein Pseudozufalls-Testverfahren (1-8) aufweist, wobei Pseudozufalls-Testbefehle und Pseudozufalls-Testdaten der superskalaren CPU (4a, 4b) zugeführt werden,
und wobei eine Ausgangsdatensignatur der superskalaren CPU mit einer Referenzdatensignatur (7) verglichen wird,
**gekennzeichnet durch**
Schätzen (2) der Architekturelemente (21-27) der superskalaren CPU auf der Basis der allgemeinen Architektur einer Klasse einer Vielzahl von unterschiedlichen superskalaren Prozessoren, wobei die superskalare CPU zu der Klasse gehört, wobei ein Architekturrahmen (28) der superskalaren CPU die Gesamtheit der geschätzten Architekturelemente (21-27) der superskalaren CPU aufweist, und wobei die Eigenschaften der superskalaren CPU eine Untergruppe des Architekturrahmens (28) der superskalaren CPU sind,
und Wählen der Pseudozufalls-Testbefehle und der Pseudozufalls-Testdaten (3) auf der Basis des Architekturrahmens (28).

2. Verfahren nach Anspruch 1, **dadurch gekennzeichnet, dass** das Testen umfasst:
- einen Funktionstest (TEST F), der die Funktionalität der superskalaren CPU (10, 12, 13) testet,
- und einen zweiten Test (TEST R), der die prozessorinterne Maschinerie der superskalaren CPU (1-8) testet.

3. Verfahren nach Anspruch 1, **dadurch gekennzeichnet, dass** die getesteten Architekturelemente (21-27) der superskalaren CPU umfassen:
- eine komplexe Befehlsablaufsteuerung;
- mehrere komplexe ALUs (arithmetische Logikeinheiten) und einfache ALUs, insbesondere wobei die Anzahl der einfachen ALUs die der komplexen ALUs übersteigt;
- Register;
- Schattenregister;
- Fließkommaeinheiten (floating point units FPUs) und/oder
- Adresserzeugungseinheiten (address generation units AGUs).

4. Verfahren nach Anspruch 1, **dadurch gekennzeichnet, dass** das Pseudozufalls-Testverfahren (1-8) eine Anzahl von Testsequenzen beinhaltet, wobei jede Testsequenz dem Testen einer Klasse von identischen Architekturelementen (21-27) des geschätzten Architekturrahmens (28) zugeordnet ist.

5. Verfahren nach Anspruch 1, **dadurch gekennzeichnet, dass** die Pseudozufalls-Testbefehle und die Pseudozufalls-Testdaten so gewählt sind, dass jedes Architekturelement (21-27) des geschätzten Architekturrahmens (28) während des Testens mit einer statistischen Sicherheit von mindestens 95%, vorzugsweise mindestens 99%, ausgeführt wird.

6. Verfahren nach Anspruch 1, **dadurch gekennzeichnet, dass** das Pseudozufalls-Testverfahren (1-8) auf einem Fehlermodell der Art "hängengeblieben bei" oder der Art "öffnet" oder der Art "überbrücken" basiert.

7. Verfahren nach Anspruch 1, **dadurch gekennzeichnet, dass** die Pseudozufalls-Testbefehle und die Pseudozufalls-Testdaten während des Testens online aus Ausgangszahlen erzeugt werden.

8. Verfahren nach Anspruch 1, **dadurch gekennzeichnet, dass** das Computersystem für sicherheitskritische Datenverarbeitung, insbesondere sicherheitskritische Echtzeit-Datenverarbeitung, ausgebildet ist.

9. Computerprogramm umfassend Mittel zum Durchführen des Verfahrens nach Anspruch 1, wenn es auf einem Computersystem umfassend eine superskalare CPU abläuft.

## Revendications

1. Procédé de test d'une unité CPU (unité centrale de traitement) superscalaire d'un système informatique,
dans lequel l'unité CPU superscalaire comprend un certain nombre d'éléments d'architecture (21-26) réalisant des opérations de base dans l'unité CPU superscalaire et la totalité des éléments d'architecture de l'unité CPU superscalaire constitue les caractéristiques (29) de l'unité CPU superscalaire,
dans lequel le test est réalisé au cours du démarrage (11) du système informatique et/ou en ligne durant le fonctionnement du système informatique,
dans lequel le test comprend une procédure de test pseudo-aléatoire (1-8),
dans lequel des instructions de test pseudo-aléatoires et des données de test pseudo-aléatoires sont fournies à l'unité CPU superscalaire (4a, 4b),
et dans lequel une signature de données de sortie de l'unité CPU superscalaire est comparée à une signature de données de référence (7),
**caractérisé par**
l'estimation (2) des éléments d'architecture (21-27) de l'unité CPU superscalaire sur la base de l'architecture générale d'une classe d'une multitude de différents processeurs superscalaires, dans lequel l'unité CPU superscalaire appartient à ladite classe, dans lequel une portée d'architecture (28) de l'unité CPU superscalaire comprend la totalité des éléments d'architecture estimés (21-27) de l'unité CPU superscalaire, et dans lequel les caractéristiques de l'unité CPU superscalaire sont un sous-ensemble de la portée d'architecture (28) de l'unité CPU superscalaire, et le choix des instructions de test pseudo-aléatoires et des données de test pseudo-aléatoires (3) sur la base de la portée d'architecture (28).

2. Procédé selon la revendication 1, **caractérisé en ce que** le test comprend
- un test fonctionnel (TEST F) testant la fonctionnalité de l'unité CPU superscalaire (10, 12, 13),
- un deuxième test (TEST R) testant le matériel interne du processeur de l'unité CPU superscalaire (1-8).

3. Procédé selon la revendication 1, **caractérisé en ce que** les éléments d'architecture testés (21-27) de l'unité CPU superscalaire comprennent
- un séquenceur d'instructions complexes ;
- de multiples unités ALU (unités logiques arithmétiques) complexes et des unités ALU simples, en particulier dans lequel les unités ALU sont plus nombreuses que les unités ALU complexes,
- des registres ;
- des registres miroirs ;
- des unités à virgule flottante (FPU) et/ou
- des unités de génération d'adresses (AGU).

4. Procédé selon la revendication 1, **caractérisé en ce que** la procédure de test pseudo-aléatoire (1-8) inclut un certain nombre de séquences de test, dans lequel chaque séquence de test est dédiée au test d'une classe d'éléments d'architecture identiques (21-27) de la portée d'architecture estimée (28).

5. Procédé selon la revendication 1, **caractérisé en ce que** les instructions de test pseudo-aléatoires et les données de test pseudo-aléatoires sont choisies de sorte que chaque élément d'architecture (21-27) de la portée d'architecture estimée (28) soit mis en oeuvre au cours du test avec une certitude statistique d'au moins 95 %, de préférence d'au moins 99 %.

6. Procédé selon la revendication 1, **caractérisé en ce que** la procédure de test pseudo-aléatoire (1-8) est basée sur un modèle de défaut de type « collage » ou de type « ouverture » ou de type « pont ».

7. Procédé selon la revendication 1, **caractérisé en ce que** les instructions de test pseudo-aléatoires et les données de test pseudo-aléatoires sont générées en ligne durant le test à partir de germes.

8. Procédé selon la revendication 1, **caractérisé en ce que** le système informatique est conçu pour de l'informatique critique, en particulier de l'informatique temps réel critique.

9. Programme informatique comprenant un moyen destiné à réaliser le procédé de la revendication 1 lorsqu'il est exécuté sur un système informatique comprenant une unité CPU superscalaire.
